# EUROPÄISCHE PATENTSCHRIFT

(11) **EP 2 870 352 B1**
(45) Veröffentlichungstag und Bekanntmachung des Hinweises auf die Patenterteilung: **30.11.2016**
(21) Anmeldenummer: 13726567.4
(22) Anmeldetag: 05.06.2013
(51) Int. Cl.: F03D 13/40, F03D 13/00

(54) **VORRICHTUNG ZUM HANDHABEN EINES WINDENERGIEANLAGEN-ROTORBLATTES**
DEVICE FOR HANDLING A WIND TURBINE ROTOR BLADE
DISPOSITIF DE MANIPULATION D'UNE PALE DE ROTOR D'ÉOLIENNE

(30) Priorität: 06.07.2012 DE 102012211877
(43) Veröffentlichungstag der Anmeldung: 13.05.2015
(73) Patentinhaber: Wobben Properties GmbH, 26607 Aurich (DE)
(72) Erfinder: LÜLKER, Frank, 26603 Aurich (DE); BRENNER, Albrecht, 26607 Aurich (DE)
(74) Vertreter: Eisenführ Speiser
(86) Internationale Anmeldenummer: PCT/EP2013/061566
(87) Internationale Veröffentlichungsnummer: WO 2014/005781

(56) Entgegenhaltungen:
- WO-A1-2011/098086
- DE-A1- 10 211 357
- JP-A- 2010 216 317
- US-A1- 2011 031 292

## Beschreibung

Die Erfindung betrifft eine Vorrichtung zum Handhaben eines Rotorblattes einer Windenergieanlage, insbesondere zum Halten des Rotorblattes und Ausführen von rotatorischen und/oder translatorischen Bewegungen.

Der Aufbau und die Herstellung eines Rotorblattes bis zu seiner endgültigen Montage am Einsatzort erfolgen in mehreren Arbeits- und Prozessschritten. Im Zuge dieser Arbeiten muss das Rotorblatt mehrmals angehoben, gedreht, versetzt und umgespannt werden, um verschiedene Bereiche an dem Rotorblatt für die durchzuführenden Arbeiten zugänglich zu machen. Die vorgenannten Arbeitsschritte werden mit zunehmender Abmessung des Rotorblattes schwieriger und unterliegen einem immer größer werdenden Arbeits- und Zeitaufwand, welche die Wirtschaftlichkeit herzustellender Rotorblätter negativ beeinträchtigt.

Aus dem Stand der Technik sind fest verankerte Halterungen zum Einspannen von Rotorblättern bekannt. Nachteilhaft an diesen Halterungen ist, dass diese nur zur Durchführung von Arbeiten entlang einer einzigen Behandlungsposition oder -strecke vorgesehen sind und zur Durchführung von Arbeiten entlang einer weiteren Behandlungsstrecke das Rotorblatt umgespannt, abtransportiert und wieder eingespannt werden muss. Des Weiteren sind die bekannten Halterungen nur zum Einspannen und Halten von kleineren Rotorblättern geeignet. Hierzu bedarf es Hebe- und Umspannvorrichtungen, die die Durchführung von Transportarbeiten ermöglichen. Darüber hinaus sind die fest im Boden verankerten Einspannvorrichtungen nicht beweglich, so dass das Rotorblatt nach der Fertigung von der Einspannvorrichtung befreit werden muss und mittels Hebe- und Umspannvorrichtungen auf ein Fahrzeug zu befördern ist. Somit ist die Herstellung des Rotorblattes mit Arbeitsschritten, die nur ein Einspannen und Umspannen zum Zwecke einer Umpositionierung des Rotorblattes darstellen, verbunden und nicht einen Herstellungsprozess oder Bearbeitungsschritt des Rotorblattes darstellen. Diese Arbeiten führen zur negativen Beeinträchtigung der Wirtschaftlichkeit bei der Herstellung von Rotorblättern.

In der prioritätsbegründenden deutschen Patentanmeldung wurde der folgende Stand der Technik recherchiert: WO 2003/057 528 A1.

JP2010-216317 offenbart eine Vorrichtung zum Handhaben eines Windenergieanlagen-Rotorblattes gemäss dem Oberbegriff von Anspruch 1.

Es ist eine Aufgabe der Erfindung, eine Vorrichtung zum Handhaben eines Rotorblattes zur besseren Herstellung, Umpositionierung, Beförderung und Montage von Rotorblättern vorzusehen.

Diese Aufgabe wird durch eine Vorrichtung zum Handhaben eines Rotorblattes gemäß Anspruch 1 gelöst.

Somit wird eine Vorrichtung zum Handhaben eines Rotorblattes einer Windenergieanlage vorgesehen. Die Vorrichtung weist zumindest einen Grundkörper zum zumindest teilweisen Umfassen des Rotorblattes mit einer Längsachse, zumindest einen Anlegeabschnitt zum Anlegen an dem Rotorblatt und zumindest einen Grundrahmen zur Aufnahme des Grundkörpers zum Drehen des Grundkörpers um die Längsachse und/oder zum Verschieben des Grundkörpers auf. Der Grundkörper weist zumindest einen schwenkbar gelagerten Schwenkabschnitt zum Angreifen an zumindest einer Seite des Rotorblattes auf. Der Schwenkabschnitt kann im Wesentlichen einen an dem Grundkörper schwenkbar gelagerten Bügel darstellen, welcher mit dem Rotorblatt verbunden werden kann.

Der Grundkörper kann derart ausgestaltet sein, dass ein Rotorblatt, insbesondere ein Rotorblatt einer Windenergieanlage aufnimmt. Das Rotorblatt wird vollständig oder zumindest teilweise von dem Grundkörper umfasst. Der Grundkörper umfasst das Rotorblatt zumindest teilweise um seine Längsachse und weist im Wesentlichen eine Ausgestaltung zum Greifen auf.

Der Schwenkabschnitt greift beim Hinablassen des Rotorblattes oder während des Positionierens des Rotorblattes in das Rotorblatt ein. Der Schwenkabschnitt weist vorzugsweise einen angepassten Andockbereich auf, welcher zur Verbindungsherstellung mit einem entsprechend vorgesehenen Bereich an dem Rotorblatt eingerichtet ist. Der Andockbereich ist vorzugsweise stiftartig ausgestaltet und kann mittels einer Schwenkbewegung in das Rotorblatt eingesteckt oder das Rotorblatt kann derart hinabgelassen werden, dass der Schwenkabschnitt und der Andockbereich sich unterhalb des dafür vorgesehenen Bereiches an dem Rotorblatt befinden und in den Einsteckbereich des Rotorblattes eingeführt werden. Nach der Verbindungsherstellung des Andockbereiches des Schwenkabschnitts mit dem Rotorblatt wird die Verbindung gesichert. Die Sicherung ist zum Beispiel mittels einer Schraubverbindung oder eines Einrastelementes zu erfolgen.

Des Weiteren kann der Grundkörper über zumindest einen Anlegeabschnitt zum Anlegen des Rotorblattes innerhalb des Grundkörpers verfügen. Der Anlegeabschnitt kann eine Anlegefläche aufweisen, die aus einem elastischen Material besteht, um beim Anlegen des Rotorblattes die Oberfläche des Rotorblattes nicht zu beschädigen. Der Anlegeabschnitt kann sich innerhalb des Grundkörpers befinden und/oder weist Hilfsarme auf, die zwar an dem Grundkörper befestigt sind, aber an deren Enden Anlegeabschnitte aufweisen, die ein Anlegen des Rotorblattes ermöglichen. Der Anlegeabschnitt kann derart ausgeführt sein, dass die Position des Anlegeabschnittes entsprechend der Position des Rotorblattes angepasst und das Rotorblatt auf dem Anlegeabschnitt abgestützt werden kann. Hierzu können die Hilfsarme beweglich ausgeführt sein und lassen sich beim Erreichen einer gewünschten Position einrasten und somit das Rotorblatt stützen bzw. Tragen. Des Weiteren kann der Anlegeabschnitt vom Blatt weg bewegt werden, um den Zugang zur kompletten Blattoberfläche zu ermöglichen. Der Grundkörper ist auf dem Grundrahmen drehbar und/oder verschiebbar gelagert. Zur Ausführung einer Drehbewegung kann der Grundkörper eine im Wesentlichen glatte Außenfläche aufweisen, die mit einem Rolllager auf dem Grundrahmen eine Drehbewegung ermöglicht. Dabei kann die Drehbewegung über das Rolllager reibschlüssig und/oder formschlüssig z. B. über Ketten oder Zahnräder übertragen werden. Des Weiteren kann der Grundkörper auf zumindest einer weiteren Einrichtung auf dem Grundrahmen angebracht sein, die eine Bewegung relativ zum Grundrahmen ermöglicht. Hierbei sind sowohl Bewegungen quer als auch längs zum Grundrahmen gemeint.

Gemäß einer weiteren bevorzugten Ausführungsform der erfindungsgemäßen Vorrichtung ist der Grundkörper C-förmig ausgestaltet. Die Aufnahme des Rotorblattes ist durch die C-Förmigkeit des Grundkörpers, die einen nicht geschlossenen Kreis darstellt besonders vorteilhaft, da zum einen eine Greifform und zum anderen eine kreisförmige Außenform zur Ausführung rotatorischer Bewegungen auf dem Grundrahmen vorliegt. Die Ausgestaltung des Grundkörpers in C-Form erhöht zudem die Stabilität und Festigkeit des Grundkörpers.

Bei einer bevorzugten Ausführungsform der vorliegenden Erfindung weist der Grundrahmen zumindest ein Rolllager zur drehbaren Lagerung des Grundkörpers auf. Hierzu kommen verschiedene Rolllager zur drehbaren Lagerung des Grundkörpers zum Einsatz. Der Grundkörper weist unterschiedlich große Rollflächen auf, die grundrahmenseitig mit Rolllagern zu unterstützen sind. Daher können verschiedene Rolllager an dem Grundrahmen angeordnet werden, die mit den entsprechenden Rollflächen des Grundkörpers eine Drehbewegung des Grundkörpers auf dem Grundrahmen ermöglichen.

Gemäß einer bevorzugten Ausführungsform der vorliegenden Erfindung weist der Grundrahmen zumindest ein Stützmittel zum Tragen des Grundrahmens und/oder Räder zum Verschieben der Vorrichtung auf einer Bodenfläche oder auf einem Schienensystem auf. Die Stützmittel an dem Grundrahmen kommen zum Tragen des Grundrahmens zum Einsatz und Stützen den Grundrahmen auf einer Bodenfläche. Der Grundrahmen kann Räder aufweisen, die eine translatorische Bewegung der Vorrichtung auf der Bodenfläche oder auf einem Schienensystem ermöglichen. Vorzugsweise kann der Grundrahmen sowohl Stützmittel als auch Räder zur Ausführung von translatorischen Bewegungen aufweisen, wobei die Stützmittel beim Erreichen einer bestimmten Position der Vorrichtung ausgefahren werden können und somit die Vorrichtung sicher positioniert und eine weitere Bewegung verhindert wird. Dies kann beispielsweise in Form eines Wechselbrückensystems realisiert werden. Die Möglichkeit zur Ausführung translatorischer Bewegungen ist besonders beim Transportieren des Rotorblattes entlang verschiedener Behandlungsstrecken zur Bearbeitung und Herstellung des Rotorblattes vorteilhaft, sodass das Rotorblatt nicht auf ein weiteres Transportmittel umgeladen bzw. umgespannt werden muss.

Bei einer weiteren bevorzugten Ausführungsform der vorliegenden Erfindung weist der Grundrahmen zumindest ein Antriebsmittel zum Verschieben des Grundkörpers und/oder des Grundrahmens auf. Als Antriebsmittel kommen insbesondere rotierende elektrische Maschinen zum Einsatz. Diese dienen zum einen der Ausführung von rotatorischen Bewegungen des Grundkörpers auf dem Grundrahmen und zum anderen der Ausführung von translatorischen Bewegungen des Grundrahmens relativ zur Umgebung. Des Weiteren kommen die Antriebsmittel auch zur Ausführung translatorischer Bewegungen einer Einrichtung auf dem Grundrahmen zum Einsatz. Bei dieser Variante ist eine quer und/oder längs verfahrbare Einrichtung auf dem Grundrahmen installiert und der Grundkörper ist auf der Einrichtung gelagert. Hiermit ist trotz des Feststehens des Grundrahmens auf der Erdoberfläche eine translatorische Bewegung des Grundkörpers durch Verschiebung der Einrichtung relativ zu dem Grundrahmen möglich. Bei den translatorischen Bewegungen der Einrichtung mit dem Grundkörper auf dem Grundrahmen sind im Wesentlichen Bewegungen entlang und/oder quer zum Grundrahmen und damit entlang und/oder quer zur Längsachse des Grundkörpers und im Wesentlichen parallel zur Bodenfläche aufzufassen. Die vorgenannte Variante kommt besonders vorteilhaft zum Einsatz, wenn der Grundrahmen auf einem Schienensystem verfahren wird und keine Querbewegung des Grundrahmens ausführbar ist.

Bei einer bevorzugten Ausführungsform der vorliegenden Erfindung weist der Grundkörper und/oder der Grundrahmen zumindest einen Tragebereich zum Einhängen z. B. eines Hakens auf. Diese Möglichkeit soll einen aufwendigen Umspannvorgang des Rotorblattes zum Transportieren zu einer weiteren Position, Behandlungsstrecke oder Montageort ersparen und somit ein Einhaken und Anheben des Grundrahmens samt Rotorblatt ermöglichen.

Gemäß einer weiteren Ausführungsform der vorliegenden Erfindung ist zumindest einer der Anlegeabschnitte drehbar an dem Grundkörper oder an einem Hilfsarm gelagert. Die drehbare Lagerung des Anlegeabschnittes an dem Grundkörper oder an dem Hilfsarm erhöht die Flexibilität und Anpassungsfähigkeit des Anlegeabschnittes beim Anlegen an dem Rotorblatt, so dass je nach gewählter Stelle des Rotorblattes, die mit dem Anlegeabschnitt zur Anlage zu bringen ist, der Anlegeabschnitt eine entsprechende Ausrichtung passend zu der Rotorblattoberfläche annehmen kann. Vorzugsweise sind drehbare oder/und mit einem Hilfsarm versehene Anlegeabschnitte an dem Grundkörper angebracht. Hierbei wird das Rotorblatt beim Hinablassen zunächst mit den fest positionierten Anlegeabschnitte zur Anlage gebracht und in einem weiteren Schritt werden die beweglichen Anlegeabschnitte an den geeigneten Rotorblattoberflächen passend angelegt.

Die Erfindung betrifft ebenfalls ein nicht beanspruchtes Verfahren zum Drehen und/oder Verschieben eines Rotorblattes einer Windenergieanlage. Das Verfahren weist die folgenden Schritte auf: Hinablassen des Rotorblattes in einem Grundkörper, Anlegen von zumindest einem Anlegeabschnitt an dem Rotorblatt, Stützen und Fixieren des Rotorblattes mit zumindest einem der Anlegeabschnitte und Drehen des Rotorblattes mittels Drehen des Grundkörpers um eine Längsachse des Grundkörpers und/oder Verschieben des Rotorblattes mittels Verschieben des Grundkörpers auf einem Grundrahmen und/oder mittels Verschieben des Grundrahmens relativ zur Umgebung. Das vorgenannte Verfahren kommt vorzugsweise bei der Herstellung von Rotorblättern und/oder Ausführung einzelner Arbeitsschritte in der Entstehungsphase eines Rotorblattes, insbesondere eines Rotorblattes einer Windenergieanlage zum Einsatz. Hierzu wird zunächst das Rotorblatt einer Windenergieanlage oder das noch nicht fertiggestellte Rotorblatt einer Windenergieanlage in dem Grundkörper hinabgelassen oder ein Teil des herzustellenden Rotorblattes in dem Grundkörper hinabgelassen oder längs in den Grundkörper hineingeführt, so dass sich das Rotorblatt zumindest teilweise innerhalb des Grundkörpers befindet. Anschließend wird zumindest ein Anlegeabschnitt an dem Rotorblatt angelegt und das Rotorblatt wird mit zumindest einem der Anlegeabschnitte gestützt und fixiert. Hierbei sind die Anlegeabschnitte derart beweglich ausgeführt, dass eine entsprechende Anpassung beim Anlegen an der Oberfläche des Rotorblattes durchgeführt werden kann. Dazu weisen die Anlegeabschnitte Hilfsarme auf, die eine entsprechende Bewegung zum angepassten Anlegen an dem Rotorblatt ermöglichen. Nach den vorgenannten Schritten können Arbeiten an dem Rotorblatt durchgeführt werden und das Rotorblatt kann entlang einer Behandlungsstrecke weiter bearbeitet und mit verschiedenen konstruktiven Komponenten und Materialien versehen werden. Während der Durchführung der vorgenannten Arbeitsschritte ist nach Bedarf ein Drehen des Rotorblattes mittels Drehen des Grundkörpers um eine Längsachse des Grundkörpers und/oder Verschieben des Rotorblattes mittels Verschieben des Grundkörpers auf einem Grundrahmen und/oder mittels Verschieben des Grundrahmens relativ zur Umgebung durchzuführen. Hierbei wird das Rotorblatt durch das Drehen oder Verschieben des Grundkörpers auf dem Grundrahmen von verschiedenen Seiten für die Durchführung von Arbeiten zugänglich gemacht. Zusätzlich kann der Grundrahmen auch relativ zur Umgebung bewegt werden und somit das Rotorblatt entlang oder quer zur Behandlungsstrecke verfahren und positioniert werden. Eine Drehbewegung des Grundkörpers auf dem Grundrahmen kann in beiden Richtungen erfolgen und je nach Breite bzw. dem Herausragen des Rotorblattes aus dem Grundkörper eventuell eingeschränkt sein und somit die Durchführung einer kompletten Umdrehung des Grundkörpers und damit des Rotorblattes nicht durchführbar sein.

Bei einem weiteren Verfahren kommen zwei zusätzliche Schritte zur Positionierung und Fixierung des Rotorblattes zum Einsatz. Bei diesem Verfahren wird das Rotorblatt nach dem Hinablassen in Richtung des Grundkörpers zunächst mit einem Schwenkabschnitt in Verbindung gebracht. Hierdurch wird der Schwenkabschnitt an dem Rotorblatt lösbar verbunden. Dafür kommt insbesondere ein Andockbereich an dem Schwenkabschnitt zum Einsatz. Dieser Andockbereich ist entsprechend einem Aufnahmebereich an dem Rotorblatt angepasst, so dass ein Anbringen des Andockbereiches mit dem dafür an dem Rotorblatt vorgesehenen Bereich ermöglicht wird. Nach dem Anbringen des Schwenkabschnittes und/oder des Andockbereiches an dem Rotorblatt erfolgt das lösbare Befestigen des Schwenkabschnittes und/oder des Andockbereiches mit dem Rotorblatt. Bei diesem Schritt kann der Andockbereich in das Rotorblatt hinein geführt werden und aus der anderen Seite des Rotorblattes herausragen, um diesen dann anschließend mit einem entsprechenden Befestigungsmittel zu sichern und mit dem Rotorblatt zu verbinden, so dass eine Herausnahme bzw. ein Herausfallen des Rotorblattes ohne Lösen des Befestigungsmittels unterbunden wird. Der nächste Schritt nach dem Anlegen von zumindest einem Anlegeabschnitt an dem Rotorblatt ist das Stützen und Fixieren des Rotorblattes mit zumindest einem der Anlegeabschnitte, vergleichbar wie in dem vorgenannten Verfahren. Hierbei kann von zwei verschiedenen Positionen des Rotorblattes relativ zum Grundkörper ausgegangen werden. Die erste Variante ist, wenn sich das Rotorblatt beim Anbringen eines Schwenkabschnittes bereits teilweise innerhalb des Grundkörpers befindet und als eine zweite Variante ist es möglich, das Rotorblatt beim aufgeklappten Schwenkabschnitt an dem Schwenkabschnitt anzubringen und zu befestigen und anschließend durch das Schwenken des Schwenkabschnittes in den Grundkörper hinein zu bewegen bzw. zu schwenken, um dann anschließend das Stützen und Fixieren des Rotorblattes mit zumindest einem der Anlegeabschnitte durchzuführen.

Gemäß einem weiteren Verfahren wird die bereits zuvor genannte Variante, nämlich, wenn sich das Rotorblatt bereits teilweise innerhalb des Grundkörpers befindet und mit einem Anlegeabschnitt zu Anlage gebracht worden ist mit einem Schwenkabschnitt in Kontakt gebracht. Bei diesem Verfahren befindet sich das Rotorblatt bereits teilweise innerhalb des Grundkörpers, so dass ein Drehen nach der Befestigung mit dem Schwenkabschnitt in dem Grundkörper nicht mehr erforderlich ist.

Weitere Merkmale und Vorteile der Erfindung sind Gegenstand der nachfolgenden Beschreibung und zeichnerischen Darstellung eines Ausführungsbeispiels.
- Fig. 1: zeigt eine perspektivische Ansicht einer Vorrichtung zum Handhaben eines Windenergieanlagenrotorblattes gemäß einem ersten Ausführungsbeispiel,
- Fig. 2: zeigt einen Querschnitt der Vorrichtung von Fig. 1,
- Fig. 3A: zeigt eine Vorderansicht der Vorrichtung von Fig. 1,
- Fig. 3B: zeigt eine schematische Darstellung der Vorrichtung zum Handhaben eines Rotorblattes gemäß einem ersten Ausführungsbeispiel,
- Fig. 4: zeigt eine Seitenansicht der Vorrichtung von Fig. 1 zusammen mit einem Rotorblatt,
- Fig. 5: zeigt eine Draufsicht der Vorrichtung von Fig. 1 gemäß dem ersten Ausführungsbeispiel zusammen mit einem Rotorblatt,
- Fig.6: zeigt eine Vorderansicht einer Vorrichtung zum Handhaben eines Windenergieanlagen-Rotorblattes gemäß einem zweiten Ausführungsbeispiel,
- Fig. 7: zeigt einen Querschnitt der Vorrichtung von Fig. 6,
- Fig. 8: zeigt eine perspektivische Ansicht der Vorrichtung zum Handhaben eines Windenergieanlagen-Rotorblattes gemäß dem zweiten Ausführungsbeispiel,
- Fig. 9: zeigt einen schematischen Querschnitt einer Vorrichtung zum Handhaben eines Windenergieanlagen-Rotorblattes gemäß dem zweiten Ausführungsbeispiel,
- Fig. 10: zeigt einen schematischen Querschnitt einer Vorrichtung zum Handhaben eines Windenergieanlagen-Rotorblattes gemäß dem zweiten Ausführungsbeispiel, und
- Fig. 11: zeigt eine schematische Seitenansicht der Vorrichtung zum Handhaben eines Rotorblattes gemäß dem zweiten Ausführungsbeispiel zusammen mit einem Rotorblatt.

Gleiche oder funktional äquivalente Elemente sind in allen Figuren mit demselben Bezugszeichen bezeichnet.

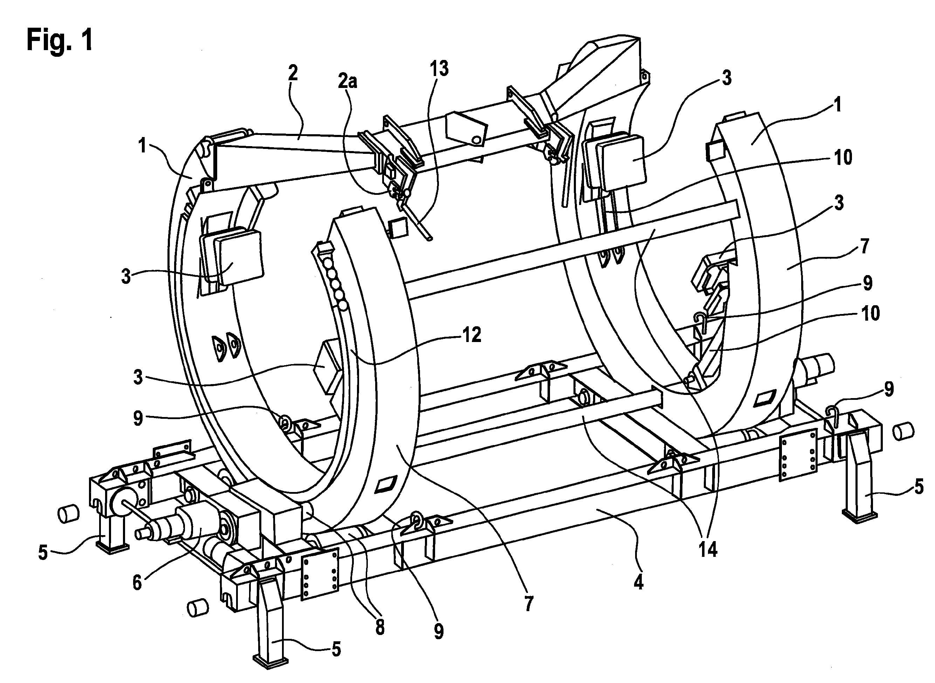

Fig. 1 zeigt eine perspektivische Ansicht einer Vorrichtung zum Handhaben eines Windenergieanlagen-Rotorblattes gemäß einem ersten Ausführungsbeispiel. Die Vorrichtung weist einen Grundkörper 1 (z. B. in Form eines Drehrings) mit zwei c-förmigen Elementen auf, die über Querstangen miteinander verbunden sind. Ein Schwenkabschnitt bzw. ein Schwenkbügel 2 kann erste Enden der C-förmigen Drehringe miteinander verbinden. Der Grundkörper 1 ist z. B. mittels Rolllagern 8 drehbar auf einem Grundrahmen 4 gelagert. Am Grundkörper 1 sind Anlegeabschnitte 3 vorgesehen, die teilweise bzw. optional über Hilfsarme 10 verfügen, welche drehbar bzw. schwenkbar an dem Grundkörper 1 angebracht sind. Die Anlegeabschnitte 3 können als Gurtstützen ausgestaltet sein und sind zum Anlegen an einem Rotorblatt, welches in den Grundkörper 1 hinabgelassen oder hineingeführt wird, vorgesehen. Der Grundkörper 1 verfügt über erste große Rollflächen 7 und zweite kleine Rollflächen 12. Die ersten und zweiten Rollflächen 7 und 12 stellen mit den Rolllagern 8, die an dem Grundrahmen 4 angeordnet sind, eine Verbindung zur Drehung des Grundkörpers 1 auf der Grundrahmen 4 her. Die zweiten Rollflächen 12 stellen mit den Rolllagern 8, die über Antriebsmittel 6 betrieben werden, eine Verbindung her und können über das Antriebsmittel 6 zur Ausführung einer Drehbewegung des Grundkörpers 1 angetrieben werden. Das Antriebsmittel 6 ist auf dem Grundrahmen 4 montiert und der Grundrahmen 4 kann mittels Stützmitteln 5 auf einer Bodenfläche aufgestellt werden. Alternativ dazu können auch Wechselbrücken vorgesehen werden. Der Grundrahmen 4 weist zum Tragen, Anheben und Transportieren Tragebereiche 9 auf, welche mit entsprechenden Haken verbunden werden können und zum Beispiel mittels eines Krans angehoben werden kann.

Der Schwenkabschnitt bzw. der Schwenkbügel 2 kann einen in dem Rotorblatt montierten Bolzen 13 aufnehmen, um somit das Rotorblatt an dem Schwenkarm 2 zu befestigen. Die Befestigung der Bolzen 13 an dem Schwenkarm kann beispielsweise durch eine drehend gelagerte Scheibe erfolgen, wobei durch die Drehbewegung der Scheibe der Bolzen 13 automatisch verriegelt wird. Die Scheibe kann dabei beispielsweise als eine Sperrklinke ausgestaltet sein.

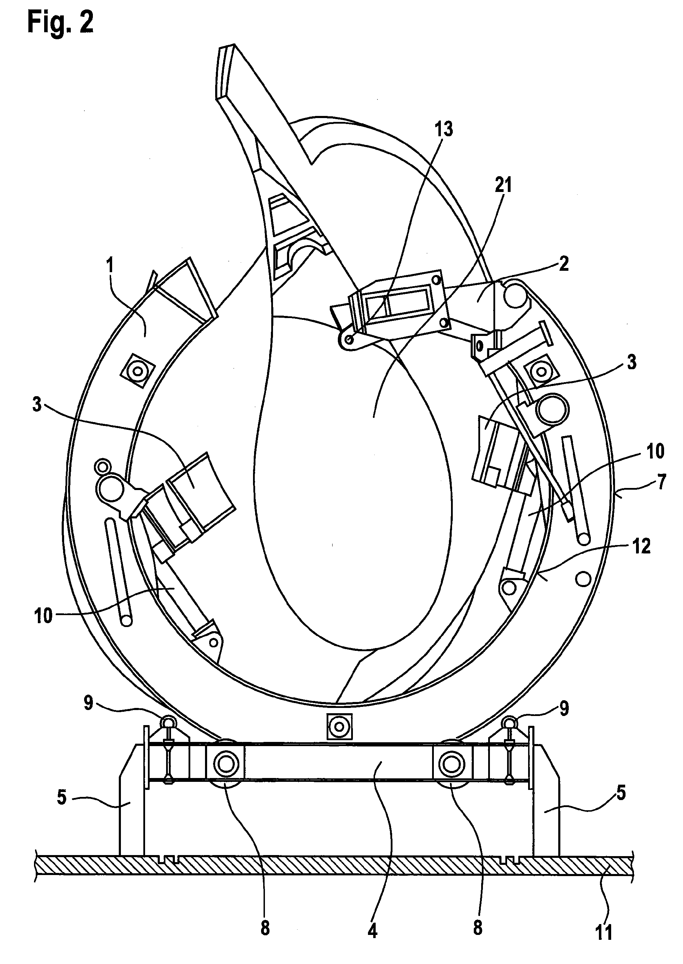

Fig. 2 zeigt einen Querschnitt der Vorrichtung aus Fig. 1. Zusätzlich ist ein Rotorblatt 21 innerhalb des Grundkörpers 1 vorgesehen. Das Rotorblatt 21 ist mit einem Schwenkabschnitt 2 verbunden, hierbei ist ein Andockbereich 13 an dem Schwenkabschnitt 2 mit einem vorgesehenen Bereich an dem Rotorblatt 21 zum Eingriff gebracht, so dass das Rotorblatt 21 an dem Schwenkabschnitt 2 hängt. Das Rotorblatt stellt in Fig. 2 noch keine Verbindung mit einem der Anlegeabschnitte 3 her. Der Grundkörper 1 samt Rotorblatt 21 ist drehbar auf dem Grundrahmen 4 gelagert und der Grundrahmen 4 ist über Stützmittel 5 auf einer Bodenfläche 11 aufgesetzt.

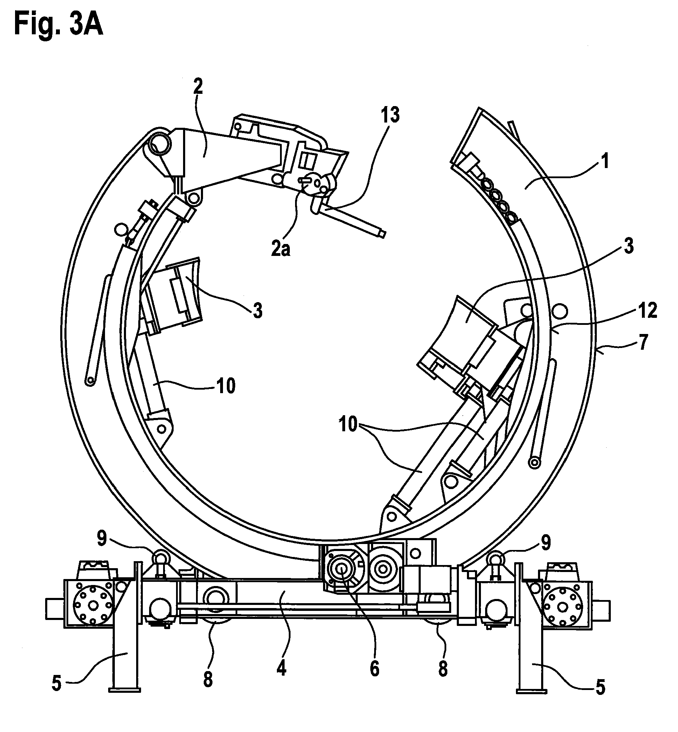

Fig. 3A zeigt eine Vorderansicht der Vorrichtung von Fig. 1. Hierbei ist insbesondere ein Bolzen 13 an einem Schwenkabschnitt 2 deutlich zu sehen. Der Bolzen 13 wird in dem Rotorblatt montiert und kann mittels einer Sperrklinke 2a an dem Schwenkabschnitt 2 befestigt werden. Die Sperrklinke ist als eine drehend gelagerte Scheibe ausgestaltet, wobei die Drehbewegung der Scheibe automatisch zu einer Verriegelung des Bolzens in der Sperrklinke führt. Damit kann eine Verriegelung in jeder beliebigen Längsdrehlage des Rotorblattes ermöglicht werden. Mittels einer Gegenkraft wie z. B. einer Feder kann die verriegelte Drehlage wieder entriegelt werden.

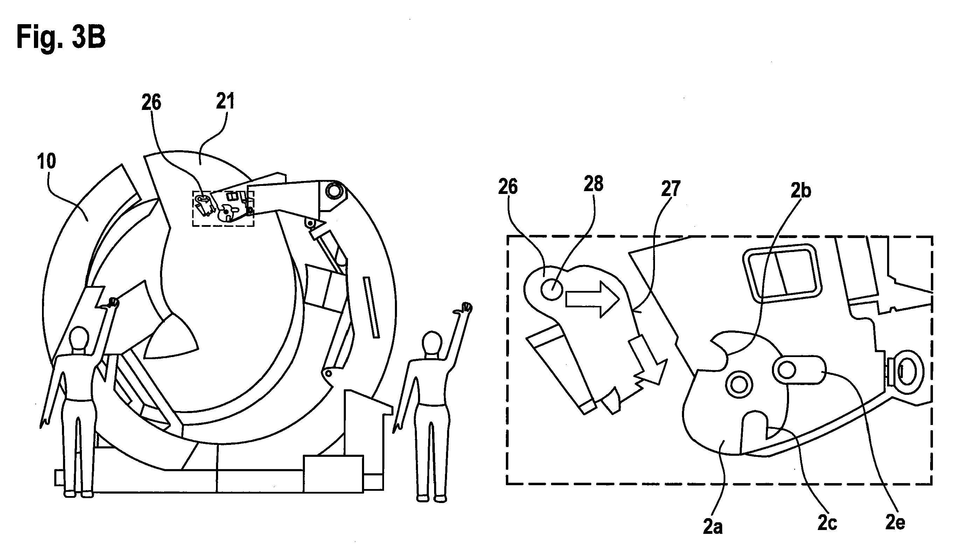

Fig. 3B zeigt eine schematische Darstellung der Vorrichtung zum Handhaben eines Rotorblattes gemäß einem ersten Ausführungsbeispiel. Eine Rotorblatthebeöse 26 kann z. B. mittels des Bolzens 13 an dem Rotorblatt 21 befestigt sein. Die Rotorblatthebeöse 26 weist eine Anschlagfläche 27 sowie zwei Vorsprünge 28 auf. Mittels der Anschlagfläche 27 und den Vorsprüngen 28 wird die Rotorblatthebeöse 26 in der Sperrklinke 2a befestigt. Die Sperrklinke 2a weist dazu eine erste Ausnehmung 2b und eine zweite Ausnehmung 2c sowie einen Sperrbolzen 2e auf. In einer Sperrposition der Sperrklinke 2a befinden sich die Vorsprünge 28 in der Ausnehmung 2a und der Bolzen 2e ist in der Ausnehmung 2c verriegelt.

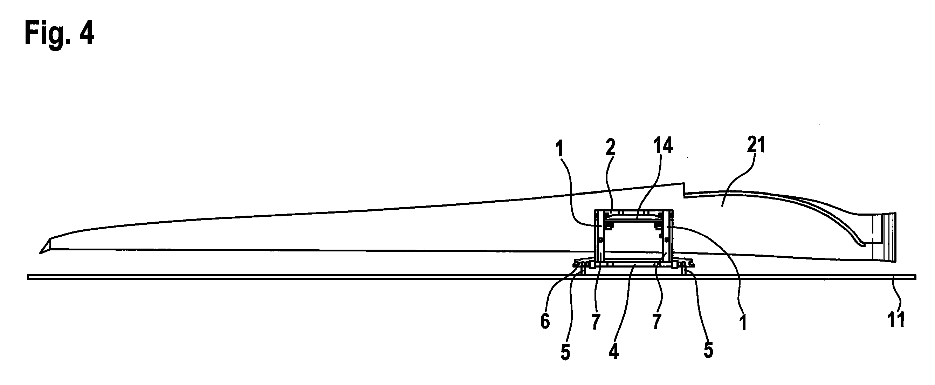

Fig. 4 zeigt eine weitere Seitenansicht der erfindungsgemäßen Vorrichtung gemäß dem ersten Ausführungsbeispiel und ein Rotorblatt. Ein Rotorblatt 21 ist in dem Grundkörper 1 platziert und wird vom Grundkörper 1 auf dem Grundrahmen 4 drehbar gelagert.

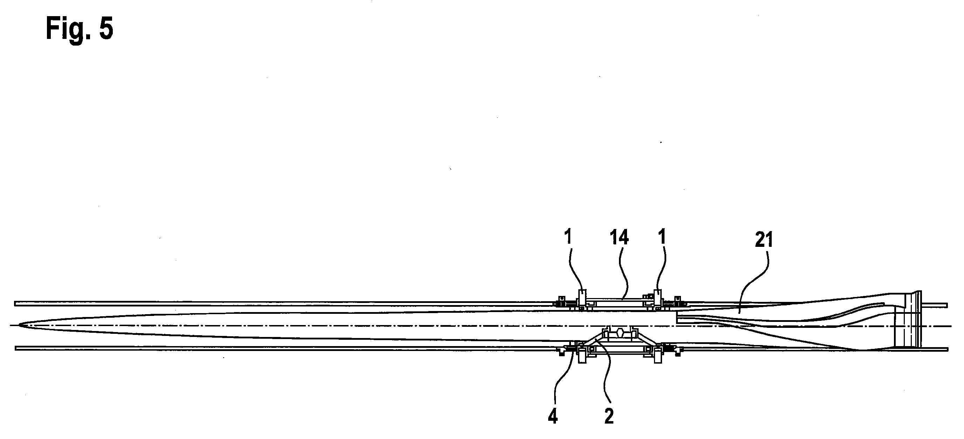

Fig. 5 zeigt eine Draufsicht der Vorrichtung von Fig. 1 gemäß dem ersten Ausführungsbeispiel zusammen mit einem Rotorblatt. Das Rotorblatt 21 ist in dem Grundkörper 1 platziert und der Grundrahmen 4 trägt den Grundkörper 1. Fig. 5 verdeutlicht das Andocken des Schwenkabschnitts 2 an das Rotorblatt 21 und zeigt, dass das Rotorblatt 21 nicht vollständig von dem Grundkörper 1 oder Schwenkabschnitt 2 umfasst wird. Ferner wurde das Rotorblatt im Vergleich zu Fig. 4 um 90° gedreht.

Der Anlegeabschnitt 3 kann eine Anlegefläche aufweisen, die aus einem elastischen Material besteht, um beim Anlegen des Rotorblattes die Oberfläche des Rotorblattes nicht zu beschädigen. Der Anlegeabschnitt 3 kann an dem Grundkörper vorgesehen sein und/oder weist Hilfsarme auf, die zwar an dem Grundkörper befestigt sind, aber an deren Enden Anlegeabschnitte aufweisen, die ein Anlegen des Rotorblattes ermöglichen. Der Anlegeabschnitt 3 kann derart ausgeführt sein, dass die Position des Anlegeabschnittes entsprechend der Position des Rotorblattes angepasst und das Rotorblatt auf dem Anlegeabschnitt abgestützt werden kann. Hierzu können die Hilfsarme beweglich ausgeführt sein und lassen sich beim Erreichen einer gewünschten Position einrasten und somit das Rotorblatt stützen bzw. Tragen.

Der Grundkörper 1 ist auf dem Grundrahmen drehbar und/oder in Längsrichtung verfahrbar gelagert. Zur Ausführung einer Drehbewegung kann der Grundkörper eine im Wesentlichen glatte Außenfläche aufweisen, die mit einem Rolllager auf dem Grundrahmen eine Drehbewegung ermöglicht. Des Weiteren kann der Grundkörper auf zumindest einer weiteren Einrichtung auf dem Grundrahmen angebracht sein, die eine Bewegung relativ zum Grundrahmen ermöglicht. Hierbei können sowohl Bewegungen quer als auch längs zum Grundrahmen möglich sein.

Der Schwenkabschnitt kann im Wesentlichen einen an dem Grundkörper schwenkbar gelagerten Bügel darstellen, welcher mit dem Rotorblatt verbunden werden kann. Der Schwenkabschnitt kann beim Hinablassen des Rotorblattes oder während des Positionierens des Rotorblattes in das Rotorblatt eingreifen. Der Schwenkabschnitt weist vorzugsweise einen angepassten Andockbereich auf, welcher zur Verbindungsherstellung mit einem entsprechend vorgesehenen Bereich an dem Rotorblatt eingerichtet ist. Der Andockbereich ist vorzugsweise stiftartig ausgestaltet und kann mittels einer Schwenkbewegung in das Rotorblatt eingesteckt oder das Rotorblatt kann derart hinabgelassen werden, dass der Schwenkabschnitt und der Andockbereich sich unterhalb des dafür vorgesehenen Bereiches an dem Rotorblatt befinden und in den Einsteckbereich des Rotorblattes eingeführt werden. Nach der Verbindungsherstellung des Andockbereiches des Schwenkabschnitts mit dem Rotorblatt wird die Verbindung gesichert. Die Sicherung ist zum Beispiel mittels einer Schraubverbindung oder eines Einrastelementes zu erfolgen.

Die Aufnahme des Rotorblattes ist durch den C-förmigen Drehring, der einen nicht geschlossenen Kreis darstellt, besonders vorteilhaft, da zum einen eine Greifform und zum anderen eine kreisförmige Außenform zur Ausführung rotatorischer Bewegungen auf dem Grundrahmen vorliegt. Die Ausgestaltung des Grundkörpers in C-Form erhöht zudem die Stabilität und Festigkeit des Grundkörpers.

Die Stützmittel an dem Grundrahmen kommen zum Tragen des Grundrahmens zum Einsatz und Stützen des Grundrahmens auf einer Bodenfläche. Der Grundrahmen weist Räder auf, die eine translatorische Bewegung der Vorrichtung auf der Bodenfläche oder auf einem Schienensystem ermöglichen. Vorzugsweise kann der Grundrahmen sowohl Stützmittel als auch Räder zur Ausführung von translatorischen Bewegungen aufweisen, wobei die Stützmittel beim Erreichen einer bestimmten Position der Vorrichtung ausgefahren werden können und somit die Vorrichtung sicher positioniert und eine weitere Bewegung verhindert wird. Die Möglichkeit zur Ausführung translatorischer Bewegungen ist besonders beim Transportieren des Rotorblattes entlang verschiedener Behandlungsstrecken zur Bearbeitung und Herstellung des Rotorblattes vorteilhaft, sodass das Rotorblatt nicht auf ein weiteres Transportmittel umgeladen bzw. umgespannt werden muss. Als Antriebsmittel kommen insbesondere rotierende elektrische Maschinen zum Einsatz. Diese dienen zum einen der Ausführung von rotatorischen Bewegungen des Grundkörpers auf dem Grundrahmen und zum anderen der Ausführung von translatorischen Bewegungen des Grundrahmens relativ zur Umgebung. Des Weiteren kommen die Antriebsmittel auch zur Ausführung translatorischer Bewegungen einer Einrichtung auf dem Grundrahmen zum Einsatz. Bei dieser Variante ist eine quer und/oder längs verfahrbare Einrichtung auf dem Grundrahmen installiert und der Grundkörper ist auf der Einrichtung gelagert. Hiermit ist trotz der Feststehens des Grundrahmens auf der Erdoberfläche eine translatorische Bewegung des Grundkörpers durch Verschiebung der Einrichtung relativ zu dem Grundrahmen möglich. Bei den translatorischen Bewegungen der Einrichtung mit dem Grundkörper auf dem Grundrahmen sind im Wesentlichen Bewegungen entlang und/oder quer zum Grundrahmen und damit entlang und/oder quer zur Längsachse des Grundkörpers und im Wesentlichen parallel zur Bodenfläche aufzufassen. Die vorgenannte Variante kommt besonders vorteilhaft zum Einsatz, wenn der Grundrahmen auf einem Schienensystem verfahren wird und keine Querbewegung des Grundrahmens ausführbar ist.

Die drehbare Lagerung des Anlegeabschnittes an dem Grundkörper oder an dem Hilfsarm erhöht die Flexibilität und Anpassungsfähigkeit des Anlegeabschnittes beim Anlegen an dem Rotorblatt, so dass je nach gewählter Stelle des Rotorblattes, die mit dem Anlegeabschnitt zur Anlage zu bringen ist, der Anlegeabschnitt eine entsprechende Ausrichtung passend zu der Rotorblattoberfläche annehmen kann. Vorzugsweise sind drehbare oder/und mit einem Hilfsarm versehene Anlegeabschnitte an dem Grundkörper angebracht. Hierbei wird das Rotorblatt beim Hinablassen zunächst mit den fest positionierten Anlegeabschnitte zur Anlage gebracht und in einem weiteren Schritt werden die beweglichen Anlegeabschnitte an den geeigneten Rotorblattoberflächen passend angelegt.

Die Vorrichtung zum Handhaben eines Windenergieanlagen-Rotorblattes gemäß dem zweiten Ausführungsbeispiel entspricht im Wesentlichen in seiner Grundausgestaltung der Vorrichtung zum Handhaben eines Windenergieanlagen-Rotorblattes gemäß dem ersten Ausführungsbeispiel. Die Vorrichtung zum Handhaben eines Rotorblattes weist einen Grundkörper 1 auf, der drehbar auf einem Grundrahmen 4 gelagert ist. Der Grundkörper 1 kann C-förmig und ringförmig ausgestaltet sein. So kann der Grundkörper 1 beispielsweise als ein Drehring ausgestaltet sein. Die C-förmige Ausgestaltung ist vorteilhaft, weil damit das Rotorblatt in den Grundkörper eingeführt und anschließend befestigt werden kann. Nachdem das Rotorblatt befestigt worden ist, kann es durch die Handhabungsvorrichtung entsprechend gehandhabt werden.

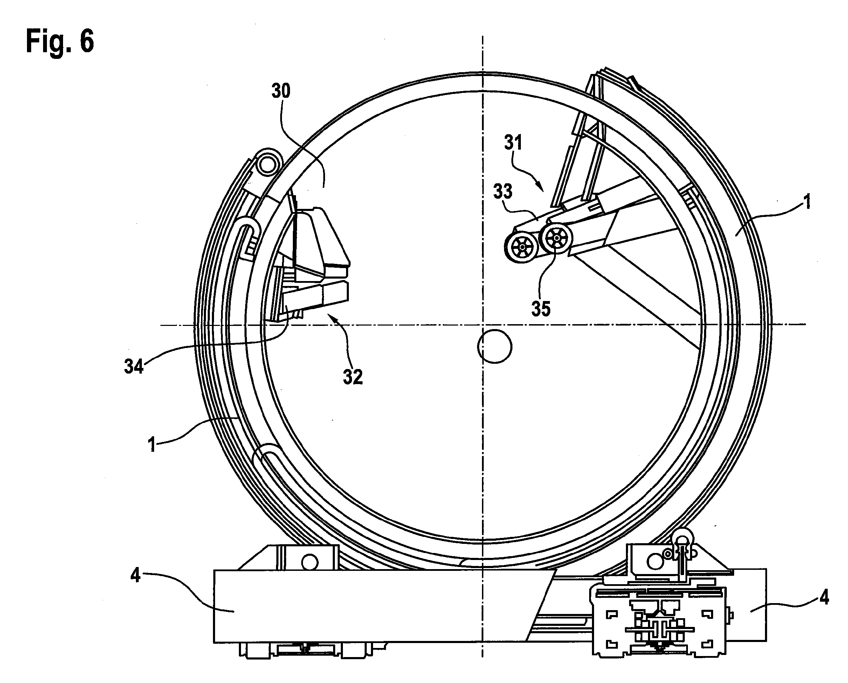

Fig. 6 zeigt eine Vorderansicht einer Vorrichtung zum Handhaben eines Windenergieanlagen-Rotorblattes gemäß einem zweiten Ausführungsbeispiel. Die Handhabungsvorrichtung zum Handhaben eines Windenergieanlagen-Rotorblattes gemäß dem zweiten Ausführungsbeispiel weist einen Grundrahmen und einen beispielsweise C-förmigen Grundkörper 1 auf, welcher drehbar auf dem Grundrahmen 4 gelagert ist. Gemäß dem zweiten Ausführungsbeispiel ist eine Befestigungseinheit 30 an dem Grundkörper 1 vorgesehen. Die Befestigungseinheit 30 kann einen ersten Abschnitt 31 und einen zweiten Abschnitt 32 aufweisen, wobei der erste Abschnitt 31 an einem ersten Ende und der zweite Abschnitt 32 an einem zweiten Ende des Grundkörpers bzw. des C-förmigen Drehringes vorgesehen ist. Mittels der Befestigungseinheit 30 kann ein Rotorblatt einer Windenergieanlage an dem Grundkörper 1 befestigt werden.

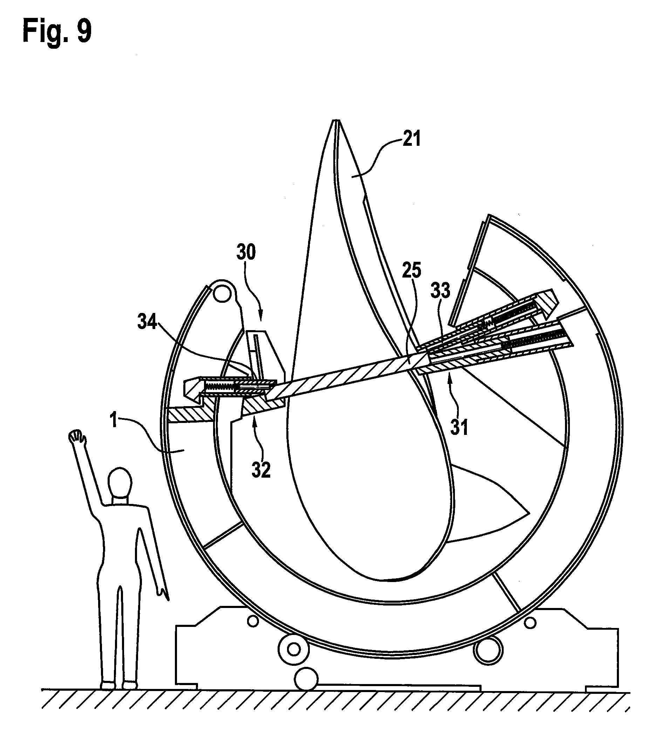

An dem ersten Abschnitt 31 sind Lastbolzen bzw. Sperrbolzen 33 und drehbare Räder 35 vorgesehen. Die Lastbolzen 33 können über eine Feder 36 vorgespannt sein. An dem zweiten Abschnitt 32 kann ein Lastbolzen bzw. Sperrbolzen 34 vorgesehen sein, welcher ebenfalls durch eine Feder 37 vorgespannt sein kann. Durch die Ausgestaltung der Federn 36 und 37 werden die Lastbolzen 33 und/oder 34 beim Einführen des Rotorblattes stets gegen die Oberfläche des Rotorblattes gedrückt. Somit kann das Rotorblatt in einem Absenkvorgang in die Vorrichtung eingeführt werden. Dies kann erfolgen, obwohl der Querschnitt des Rotorblattes in Höhe der Steckbolzen im Blatt (Bolzen 25, Fig. 9) mit seinem relativ kürzeren waagerechten Abstand eine Hinterschneidung zum größeren Abstand des vorigen Querschnittes darstellt.

Die Verriegelungsbolzen 33, 34 können wie oben beschrieben durch eine Feder vorgespannt sein. Alternativ dazu können sie auch durch einen Antrieb derart betätigt werden, dass sie oberhalb der Steckbolzen (Bolzen 25 in Fig. 9) anliegen und die Steckbolzen 25 damit sperren. Dies hat den Vorteil, dass damit eine Verriegelung des Rotorblattes innerhalb der Handhabungsvorrichtung ermöglicht wird.

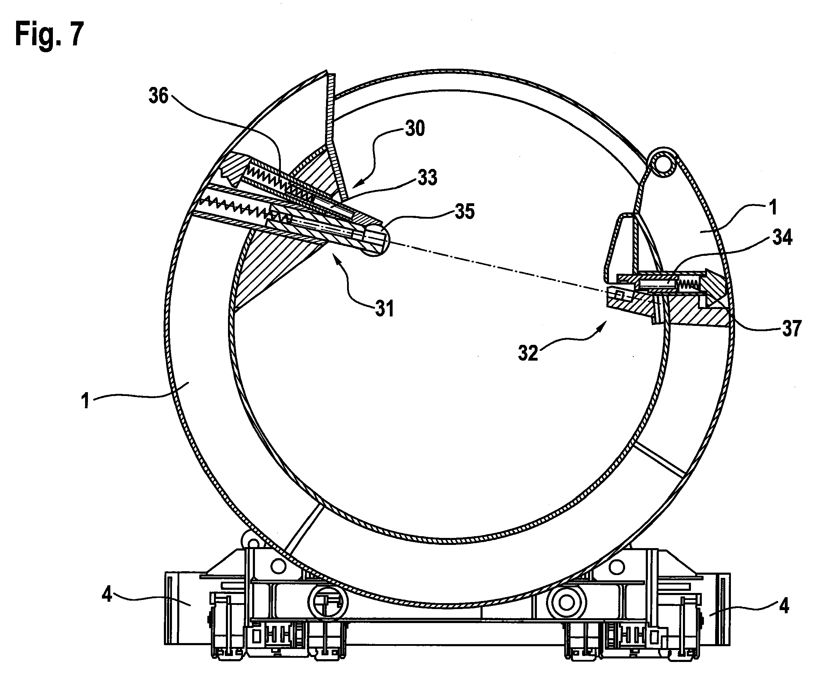

Fig. 7 zeigt einen Querschnitt der Vorrichtung von Fig. 6. Die Handhabungsvorrichtung gemäß dem zweiten Ausführungsbeispiel weist einen Grundrahmen 4, einen darauf drehbar gelagerten Grundkörper 1 zur Aufnahme des Rotorblattes sowie eine Befestigungseinrichtung 30 auf. Die Befestigungseinheit 30 weist einen ersten und zweiten Abschnitt 31, 32 auf. Der erste Abschnitt 31 der Befestigungseinheit 30 weist einen Last- bzw. Sperrbolzen 33, drehbare Räder 35 sowie eine Feder 36 beispielsweise zum Vorspannen des Lastbolzens 33 auf. Der zweite Abschnitt 32 weist ebenfalls einen Bolzen 34 sowie eine Feder 37 zum Vorspannen des Bolzens auf. Durch diese Lastbolzen 33, 34 kann das Rotorblatt in der Handhabungsvorrichtung verriegelt werden.

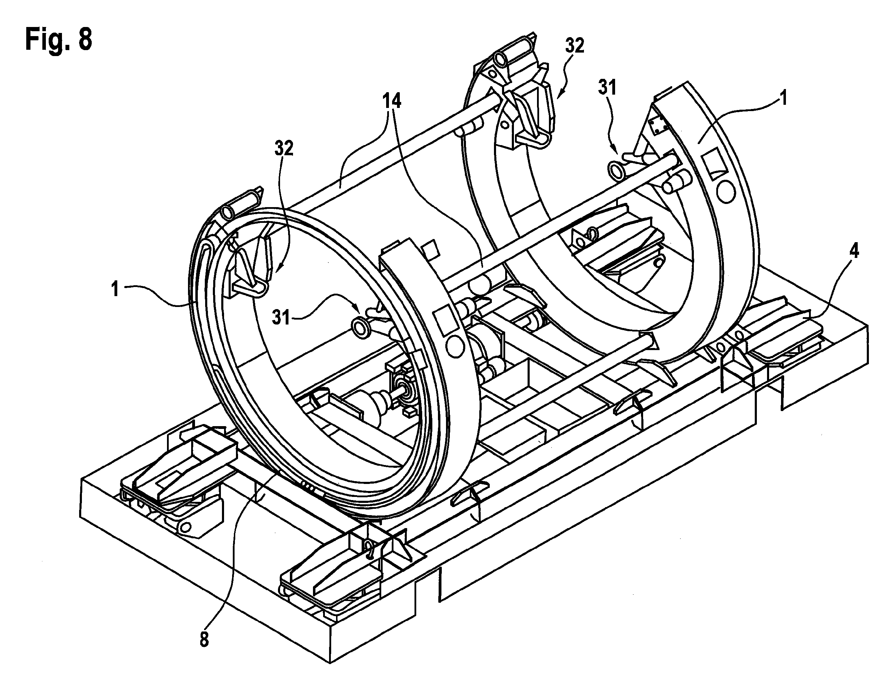

Fig. 8 zeigt eine perspektivische Ansicht der Vorrichtung zum Handhaben eines Windenergieanlagen-Rotorblattes gemäß dem zweiten Ausführungsbeispiel. Die Handhabungsvorrichtung weist einen Grundrahmen 4 und einen darauf drehbar gelagerten Grundkörper 1 auf. Der Grundkörper 1 besteht z. B. aus zwei C-förmigen und ringförmigen Drehringen, welche eine Öffnung aufweisen, durch welche ein Rotorblatt einer Windenergieanlage eingeführt werden kann. An den C-förmigen Drehringen ist jeweils eine Befestigungseinheit mit einem ersten und zweiten Befestigungsabschnitt 31, 32 vorgesehen.

Fig. 9 zeigt einen schematischen Querschnitt einer Vorrichtung zum Handhaben eines Windenergieanlagen-Rotorblattes gemäß dem zweiten Ausführungsbeispiel. Die Handhabungsvorrichtung gemäß dem zweiten Ausführungsbeispiel weist einen Grundrahmen 4 und einen darauf drehbar gelagerten Grundkörper 1 zur Aufnahme und Befestigung eines Rotorblattes einer Windenergieanlage auf. Gemäß dem zweiten Ausführungsbeispiel weist das Rotorblatt 21 der Windenergieanlage mindestens eine Befestigungsstrebe oder einen Befestigungsbolzen bzw. einen Steckbolzen 25 auf, welche sich zwischen einer Druck- und einer Saugseite des Windenergieanlagen-Rotorblattes und jeweils darüber hinaus erstreckt. Vorzugsweise werden zwei oder mehr Steckbolzen (Befestigungsstreben oder Befestigungsbolzen) vorgesehen. Mittels dieser Strebe/des Bolzens 25 kann das Rotorblatt 21 in der Befestigungseinheit 30 montiert bzw. befestigt werden. Hierbei wird ein Ende der Strebe 25 in dem ersten Abschnitt 31 der Befestigungseinheit und ein zweites Ende der Strebe wird in dem zweiten Abschnitt 32 der Befestigungseinheit 30 vorgesehen bzw. montiert.

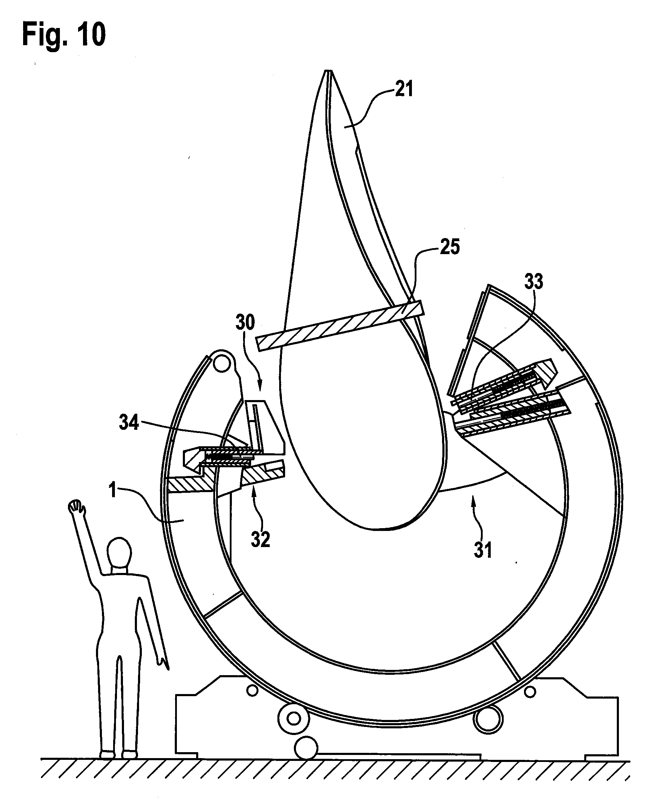

Fig. 10 zeigt einen schematischen Querschnitt einer Vorrichtung zum Handhaben eines Windenergieanlagen-Rotorblattes gemäß dem zweiten Ausführungsbeispiel. In Fig. 9 ist eine Situation gezeigt, wo das Rotorblatt 21 gerade in die Handhabungsvorrichtung eingeführt wird. Die Handhabungsvorrichtung gemäß Fig. 10 entspricht der Handhabungsvorrichtung gemäß Fig. 9. Wie in Fig. 10 gezeigt, sind die Bolzen 33 und 34 eingefahren, so dass das Rotorblatt eingeführt werden kann. In Fig. 10 ist ebenfalls zu sehen, dass die Position des Bolzens 25 in dem Rotorblatt 21 nicht an der dicksten Stelle des Rotorblattes vorgesehen ist.

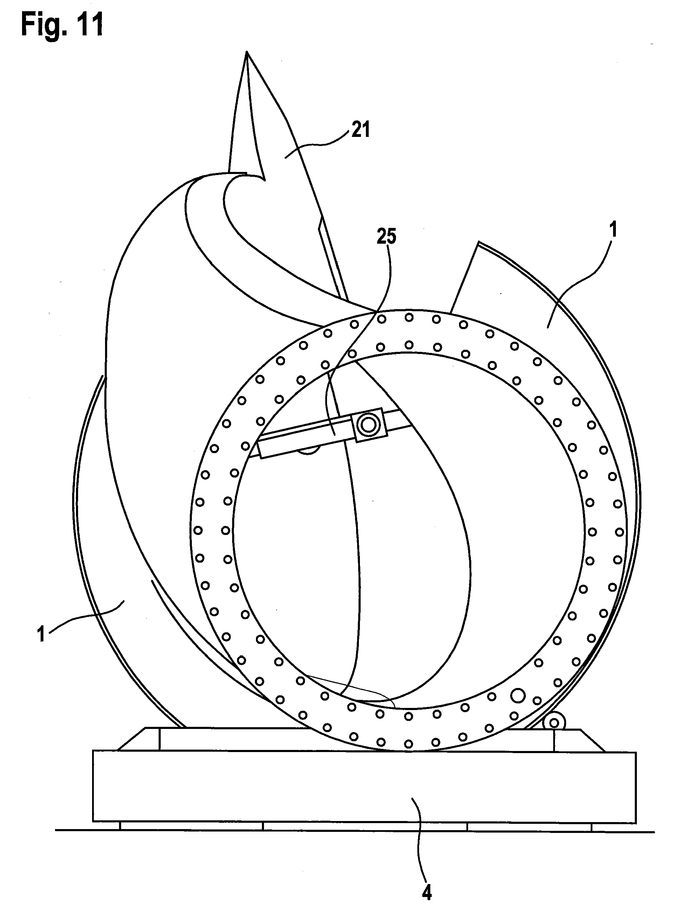

Fig. 11 zeigt eine schematische Seitenansicht der Vorrichtung zum Handhaben eines Rotorblattes gemäß dem zweiten Ausführungsbeispiel zusammen mit einem Rotorblatt. In Fig. 11 ist sowohl die Handhabungsvorrichtung gemäß dem zweiten Ausführungsbeispiel als auch ein sich darin befindliches Rotorblatt 21 gezeigt. Ferner ist die Befestigungsstrebe 25 innerhalb des Rotorblattes gezeigt. Die Funktion der Befestigungsstrebe entspricht dabei der Befestigungsstrebe gemäß Fig. 9.

## Patentansprüche

1. Vorrichtung zum Handhaben eines Windenergieanlagen-Rotorblattes (21) mit einer Längsachse (1a) mit
zumindest einem Grundkörper (1) zum zumindest teilweisen Umfassen und Halten des Rotorblatts (21),
zumindest einem Grundrahmen (4) zur drehbaren Aufnahme des Grundkörpers (1),
wobei der Grundkörper (1) zumindest einen schwenkbar gelagerten Schwenkabschnitt (2) zum Angreifen an zumindest einer Seite des Rotorblattes (21) aufweist, und
mindestens einer Befestigungseinheit (30) zum Befestigen eines Windenergieanlagen-Rotorblattes (21) in der Vorrichtung,
wobei die Befestigungseinheit (30) einen ersten und zweiten Abschnitt (31, 32) aufweist,
wobei der erste Abschnitt (31) an einem ersten Ende und der zweite Abschnitt (32) an einem zweiten Ende des Grundkörpers (1) vorgesehen ist,
**dadurch gekennzeichnet, dass**
die Befestigungseinheit (30) dazu ausgestaltet ist, einen Befestigungsbolzen (25) an bzw. in einem Windenergieanlagen-Rotorblatt aufzunehmen.

2. Vorrichtung nach Anspruch 1, wobei der Grundkörper (1) c-förmig ausgestaltet ist.

3. Vorrichtung nach Anspruch 2,
wobei der Grundrahmen (4) zumindest zwei Rolllager (8) zur drehbaren Lagerung des Grundkörpers (1) aufweist.

4. Vorrichtung nach einem der vorgenannten Ansprüche,
wobei der Grundrahmen (4) zumindest ein Stützmittel (5) zum Tragen des Grundrahmens (4) und/oder Räder zum Verschieben der Vorrichtung auf einer Bodenfläche (11) oder auf einem Schienensystem aufweist.

5. Vorrichtung nach einem der vorgenannten Ansprüche,
wobei der Grundrahmen (4) zumindest ein Antriebsmittel (6) zum Drehen des Grundkörpers (1) und/oder zum Längs- und/oder Querverfahren des Grundkörpers (1) aufweist.

6. Vorrichtung nach einem der vorgenannten Ansprüche,
wobei der Grundkörper (1) und/oder der Grundrahmen (4) zumindest einen Tragebereich (9) zum Einhängen eines Hakens aufweist.

7. Vorrichtung nach Anspruch 1, wobei
der erste und zweite Abschnitt (31, 32) jeweils einen Sperrbolzen (33, 34) zum Sperren des Befestigungsbolzens (25) aufweist, wenn das Windenergieanlagen-Rotorblatt in die Vorrichtung eingeführt ist.

8. Vorrichtung nach einem der Ansprüche 1 bis 6, wobei
der Schwenkabschnitt (2) eine Sperrklinke (2a) zum Verriegeln einer Rotorblattbefestigungseinheit (26) aufweist, welche an dem Rotorblatt befestigt ist.

## Claims

1. Apparatus for handling a wind power installation rotor blade (21) with a longitudinal axis (1a) comprising
at least one main body (1) for at least partially embracing and holding the rotor blade (21), and
at least one main frame (4) for rotatably receiving the main body (1), wherein
the main body (1) has at least one pivotably mounted pivotal portion (2) for engagement at at least one side of the rotor blade (21),
at least one fixing unit (30) for fixing a wind power installation rotor blade (21) in the apparatus,
**characterized in that** the fixing unit (30) has a first and a second portion (31, 32), wherein the first portion (31) is provided at a first end of the main body (1) and the second portion (32) is provided at a second end of the main body (1),
wherein the fixing unit (30) is adapted to receive a fixing bolt (25) on or in a wind power installation rotor blade.

2. Apparatus according to claim 1 wherein the main body (1) is of a C-shaped configuration.

3. Apparatus according to claim 2 wherein the main frame (4) has at least two rolling bearings (8) for rotatably mounting the main body (1).

4. Apparatus according to one of the preceding claims wherein the main frame (4) has at least one support means (5) for carrying the main frame (4) and/or wheels for displacement of the apparatus on a ground surface (11) or on a rail system.

5. Apparatus according to one of the preceding claims wherein the main frame (4) has at least one drive means (6) for rotating the main body (1) and/or for longitudinal and/or transverse displacement of the main body (1).

6. Apparatus according to one of the preceding claims wherein the main body (1) and/or the main frame (4) has at least one carrier region (9) for hangingly engaging a hook.

7. Apparatus according to claim 1 wherein the first and second portions (31, 32) respectively have a locking pin (33, 34) for locking the fixing bolt (25) when the wind power installation rotor blade is introduced into the apparatus.

8. Apparatus according to one of claims 1 to 6 wherein the pivotal portion (2) has a locking pawl (2a) for locking a rotor blade fixing unit (26) which is fixed to the rotor blade.

## Revendications

1. Dispositif de manipulation d'une pale de rotor d'éolienne (21) comprenant un axe longitudinal (1a), avec au moins un corps de base (1) pour entourer et saisir au moins en partie la pale de rotor (21),
au moins un cadre de base (4) pour recevoir de manière rotative le corps de base (1),
dans lequel le corps de base (1) présente au moins un tronçon de pivotement (2) monté de manière à pouvoir pivoter, destiné à s'engager au niveau au moins d'un côté de la pale de rotor (21), et
au moins une unité de fixation (30) pour fixer une pale de rotor d'éolienne (21) dans le dispositif,
dans lequel l'unité de fixation (30) présente un premier et un deuxième tronçon (31, 32),
dans lequel le premier tronçon (31) est prévu au niveau d'une première extrémité et le deuxième tronçon (32) est prévu au niveau d'une deuxième extrémité du corps de base (1),
**caractérisé en ce**
**que** l'unité de fixation (30) est configurée pour recevoir un boulon de fixation (25) au niveau de ou dans la pale de rotor d'éolienne.

2. Dispositif selon la revendication 1, dans lequel le corps de base (1) est configuré de manière à présenter une forme de c.

3. Dispositif selon la revendication 2,
dans lequel le cadre de base (4) présente au moins deux paliers à roulement (8) pour monter de manière rotative le corps de base (1).

4. Dispositif selon l'une quelconque des revendications précédentes,
dans lequel le cadre de base (4) présente au moins un moyen d'appui (5) pour supporter le cadre de base (4) et/ou des roues pour déplacer par coulissement le dispositif sur une surface au sol (11) ou sur un système de rail.

5. Dispositif selon l'une quelconque des revendications précédentes,
dans lequel le cadre de base (4) présente au moins un moyen d'entraînement (6) pour faire tourner le corps de base (1) et/ou pour déplacer de manière longitudinale et/ou transversale le corps de base (1).

6. Dispositif selon l'une quelconque des revendications précédentes,
dans lequel le corps de base (1) et/ou le cadre de base (4) présentent au moins une zone porteuse (9) pour suspendre un crochet.

7. Dispositif selon la revendication 1, dans lequel le premier et le deuxième tronçon (31, 32) présentent respectivement un boulon d'arrêt (33, 34) pour arrêter le boulon de fixation (25) quand la pale de rotor d'éolienne est introduite dans le dispositif.

8. Dispositif selon l'une quelconque des revendications 1 à 6, dans lequel
le tronçon de pivotement (2) présente un cliquet d'arrêt (2a) pour verrouiller une unité de fixation de pale de rotor (26), qui est fixée au niveau de la pale de rotor.
